# EUROPEAN PATENT APPLICATION

(11) **EP 4 604 380 A1**
(43) Date of publication of application: **20.08.2025**
(21) Application number: 23914146.8
(22) Date of filing: 09.03.2023
(51) Int. Cl.: H02M 7/483

(54) **SWITCH MODULE, SWITCH VALVE STRING AND CONTROL METHOD**

(30) Priority: 06.01.2023 CN 202310019815; 06.01.2023 CN 202310019139
(71) Applicant: TSINGHUA UNIVERSITY, Beijing, 100084 (CN); Sichuan Energy Internet Research Institute Tsinghhua University, Chengdu, Sichuan 610299 (CN)
(72) Inventor: ZHAO, Biao, Beijing 100084 (CN); ZHANG, Xueyin, Chengdu, Sichuan 610299 (CN); BAI, Ruihang, Beijing 100084 (CN); QU, Lu, Beijing 100084 (CN); YU, Zhanqing, Beijing 100084 (CN); SONG, Qiang, Beijing 100084 (CN); ZENG, Rong, Beijing 100084 (CN)
(74) Representative: Meissner Bolte Partnerschaft mbB
(86) International application number: PCT/CN2023/080609
(87) International publication number: WO 2024/145991

(57) **Abstract**

Provided in the present disclosure are a switch module, a switch valve string and a control method. The switch module includes a power switch device T1, a diode D1, a voltage equalizing capacitor C1 and an energy dissipating element H1, wherein the energy dissipating element H1 is connected in parallel to two ends of the voltage equalizing capacitor C1, an anode of the diode D1 is connected to a collector of the power switch device T1, one end of the voltage equalizing capacitor C1 is connected to a cathode of the diode D1, the other end of the voltage equalizing capacitor C1 is connected to an emitter of the power switch device T1, and a diode D2 is connected in anti-parallel to the power switch device T1. The switch module and switch valve string provided in the present disclosure have the characteristics of high reliability, high efficiency and easiness in engineering.

## Description

### FIELD OF TECHNOLOGY

The present disclosure relates to the technical field of direct current power transmission systems, and in particular, to a switch module, a switch valve string, and a control method.

### BACKGROUND

With a flourishing development of new energy power generation, a direct current power transmission system has obvious advantages in terms of conveying efficiency, stability and controllability than an alternating current system, and a wide attention is obtained.

An existing direct current power transmission system is based on a modular multilevel converter (MMC), and the MMC-based flexible direct current transmission system has more engineering applications at home and abroad. The MMC can achieve AC/DC conversion of different voltage levels and capacity levels, and has the characteristics of high voltage resistance, large capacity and high maturity. However, there are a large number of MMC bridge arms (for example, a three-phase MMC requires 6 bridge arms), a utilization rate of a direct current voltage is low (a peak value of an alternating current voltage is 1/4 of a voltage of a phase bridge arm module), module capacitance is huge (the module capacitance needs to absorb power frequency and double frequency fluctuation), and a loss is high (all switching devices are hard switches). Therefore, the MMC has problems of a high cost, a large volume and a large weight. The above problems restrict the development of the direct current power transmission system, especially for an offshore wind power system, a cost of an offshore platform is very high, a volume and a weight of a converter seriously affect the cost of the offshore platform, and a cost of an offshore wind power direct current power transmission system based on the MMC is quite high.

Therefore, it is necessary to design a switch module, a switch valve string and a control method to solve the above technical problems.

### SUMMARY

In view of the above technical problem, provided in the present invention is a switch module, wherein the switch module comprises a power switch device T1, a diode D1, a voltage equalizing capacitor C1 and an energy dissipating element H1, wherein
the energy dissipating element H1 is connected in parallel to two ends of the voltage equalizing capacitor C1; and
an anode of the diode D1 is connected to a collector of the power switch device T1, one end of the voltage equalizing capacitor C1 is connected to a cathode of the diode D1, the other end of the voltage equalizing capacitor C1 is connected to an emitter of the power switch device T1, and a diode D2 is connected in anti-parallel to the power switch device T1.

Further, the energy dissipating element H1 is any one or a combination of an energy acquisition power supply V, a first energy dissipating resistor R1, and a switchable device,
wherein the switchable device comprises a second energy dissipating resistor R2 and a switch S connected in series with the second energy dissipating resistor R2.

Further, when the energy dissipating element H1 is the switchable device, one end of the switch S is connected to one end of the second energy dissipating resistor R2, the other end of the switch S is connected to a positive electrode of the voltage equalizing capacitor C1, and the other end of the second energy dissipating resistor R2 is connected to a negative electrode of the voltage equalizing capacitor C1.

Further, the combination has a first combination form, wherein the first combination form is:
the energy dissipating element H1 comprises the switchable device and the energy acquisition power supply V, wherein one end of the switch S is connected to one end of the second energy dissipating resistor R2, and the other end of the switch S is connected to a positive electrode of the energy acquisition power supply V; and the other end of the second energy dissipating resistor R2 is connected to a negative electrode of the energy acquisition power supply V; and the positive electrode of the energy acquisition power supply V is connected to a positive electrode of the voltage equalizing capacitor C1, and the negative electrode of the energy acquisition power supply V is connected to a negative electrode of the voltage equalizing capacitor C1.

Further, the combination has a second combination form, wherein the second combination form is:
the energy dissipating element H1 comprises the first energy dissipating resistor R1 and the energy acquisition power supply V, wherein one end of the first energy dissipating resistor R1 is connected to a positive electrode of energy acquisition power supply V, and the other end of the first energy dissipating resistor R1 is connected to a negative electrode of the energy acquisition power supply V, the positive electrode of the energy acquisition power supply V is connected to a positive electrode of the voltage equalizing capacitor C1, and the negative electrode of the energy acquisition power supply V is connected to a negative electrode of the voltage equalizing capacitor C1.

Further, the combination has a third combination form, wherein the second combination form is:
the energy dissipating element H1 comprises the first energy dissipating resistor R1, the energy acquisition power supply V and the switchable device, wherein one end of the first energy dissipating resistor R1 is connected to a positive electrode of the energy acquisition power supply V, the other end of the first energy dissipating resistor R1 is connected to a negative electrode of the energy acquisition power supply V, the positive electrode of the energy acquisition power supply V is connected to a positive electrode of the voltage equalizing capacitor C1, and the negative electrode of the energy acquisition power supply V is connected to a negative electrode of the voltage equalizing capacitor C1; and one end of the switch S is connected to one end of the second energy dissipating resistor R2, the other end of the switch S is connected to one end of the first energy dissipating resistor R1, and the other end of the second energy dissipating resistor R2 is connected to the other end of the first energy dissipating resistor R1.

Further, the switch module further comprises a switch-type bypass element K1, one end of the switch-type bypass element K1 is connected to the collector of the power switch device T1, and the other end of the switch-type bypass element K1 is connected to the emitter of the power switch device T1.

In another aspect, the present disclosure further provides a switch valve string, wherein the switch valve string comprises a terminal A, a terminal B, and n switch modules as described above, wherein
the n switch modules are sequentially connected in series and disposed between the terminal A and the terminal B.

Further, the n switch modules are sequentially connected in series in a following manner:
a collector in a first power switch device T1 is connected to the terminal A, and an emitter in the n^{th} power switch device T1 is connected to the terminal B; and
in the remaining power switch devices T1, a collector in a next power switch device T1 is connected to an emitter in a previous power switch device T1.

In another aspect, the present disclosure further provides a control method for a switch valve string, the switch valve string using the switch valve string as described above, wherein the control method comprises:
reconfiguring N2 switch modules between the two terminals A and B of the switch valve string after the switch valve string reaches a normal operating condition, and N2 ≥ 1;
sorting voltages of voltage equalizing capacitors C1 of N1 + N2 switch modules of the switch valve string; and
after sorting, maintaining the power switch devices T1 turned on for the first N/2 switch modules with voltages from high to low, controlling power switch devices T1 of the remaining N1 switch modules to be turned on or turned off to achieve equalizing control of the voltage equalizing capacitors C1 in all the switch modules.

Further, the normal operating condition is: N1 * Uₛₘ ≥ Uₘₐₓ,
wherein Uₘₐₓ is a voltage peak value between the two terminals A and B of the switch valve string; the Uₛₘ is a voltage rated value of a voltage equalizing capacitor C1 of a single switch module; and N1 is the number of the switch modules in the switch valve string before the N2 switch modules are configured.

The present disclosure provides a switch module, a switch valve string, and a control method. A topology of a converter not only greatly reduces the number of the power switch devices and the amount of capacitance compared with the MMC, but also ensures consistency of the voltages of the power switch devices in the switch valve, and can realize the self-energy acquisition of the driving power supply and the control system, and can also realize a soft switch of a part of the power switch devices. Compared with the MMC, it has the characteristics of a low cost, a small volume, a light weight and high efficiency, and compared with VSC (Voltage Source Converter) of which devices are connected in series, it has the characteristics of high reliability, high efficiency and easiness in engineering.

Other features and advantages of the present disclosure will be set forth in the following description, and partially become apparent from the description, or be understood by implementing the present disclosure. The objectives and other advantages of the present disclosure may be realized and obtained by structures indicated in the description and accompanying drawings.

### BRIEF DESCRIPTION OF THE DRAWINGS

In order to more clearly illustrate embodiments of the present disclosure or technical schemes in the prior art, drawings required in the description of the embodiments or the prior art will be briefly described below, and obviously, the drawings in the following description are some embodiments of the present disclosure, and other drawings may be obtained by those of ordinary skill in the art according to these drawings without creative efforts.
FIG. 1 shows a topology diagram of a switch module according to an embodiment of the present disclosure.
FIG. 2 shows a topology diagram of an energy dissipating element H1 when the energy dissipating element H1 is an energy acquisition power supply according to an embodiment of the present disclosure.
FIG. 3 shows a topology diagram of the energy dissipating element H1 when the energy dissipating element H1 is a first energy dissipating resistor according to an embodiment of the present disclosure.
FIG. 4 shows a topology diagram of the energy dissipating element H1 when the energy dissipating element H1 is a switchable device according to an embodiment of the present disclosure.
FIG. 5 shows a topology diagram of a first combination form according to an embodiment of the present disclosure.
FIG. 6 shows a topology diagram of a second combination form according to an embodiment of the present disclosure.
FIG. 7 shows a topology diagram of a third combination form according to an embodiment of the present disclosure.

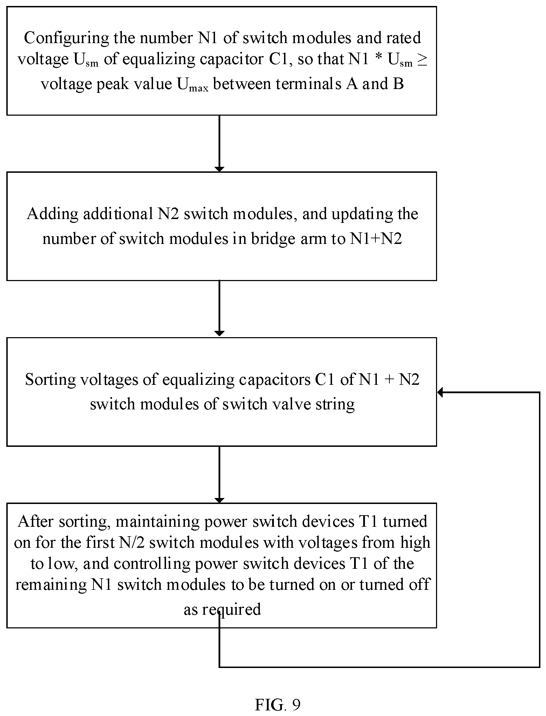

FIG. 9 is a flowchart of a control method for a switch valve string according to an embodiment of the present disclosure.
FIG. 10 shows a topology diagram of a single-phase AC/DC circuit according to an embodiment of the present disclosure.
FIG. 11 shows a topology diagram of a three-phase AC/DC circuit according to an embodiment of the present disclosure.
FIG. 12 shows a topology diagram of a BOOST converter according to an embodiment of the present disclosure.
FIG. 13 shows a topology diagram of a BUCK converter according to an embodiment of the present disclosure.
FIG. 14 shows a topology diagram of a converter when the converter further comprises a transformer and a reactor and the number of switch valve and the number of switched capacitor valve are both 1 in the converter according to an embodiment of the present disclosure.
FIG. 15 shows a topology diagram of a switched capacitor valve when a switched capacitor module is a half-bridge module according to an embodiment of the present disclosure.
FIG. 16 shows a topology diagram of a switched capacitor valve when the switched capacitor module is a full-bridge module according to an embodiment of the present disclosure.
FIG. 17 shows a topology diagram of a hybrid module according to an embodiment of the present disclosure.
FIG. 18 shows a converter topology diagram when no transformer is provided and no energy dissipating element H2 is arranged on the switched capacitor module according to an embodiment of the present disclosure.
FIG. 19 shows a converter topology diagram when no transformer is provided, no energy dissipating element H2 is arranged on the switched capacitor module, and the reactor is located at a positive electrode of a DC port of the converter according to an embodiment of the present disclosure.
FIG. 20 shows a converter topology diagram when no transformer is provided, no energy dissipating element H2 is arranged on the switched capacitor module, and the reactor is located at a negative electrode of the DC port of the converter according to an embodiment of the present disclosure.
FIG. 21 shows a converter topology diagram when a half-bridge structure is used in a switch valve according to an embodiment of the present disclosure.
FIG. 22 shows a converter topology diagram when no transformer is provided and no energy dissipating element H2 is arranged on the switched capacitor module according to an embodiment of the present disclosure.
FIG. 23 shows a modified topology diagram of the converter according to FIG. 22.
FIG. 24 shows a converter topology diagram according to a first transformation of the converter according to FIG. 22.
FIG. 25 shows a converter topology diagram of a second transformation of the converter according to FIG. 22.
FIG. 26 shows a converter topology diagram of a third transformation of the converter according to FIG. 22.
FIG. 27 shows a converter topology diagram of a transformation of the converter according to FIG. 26.
FIG. 28 shows a multi-phase topology diagram of a converter according to an embodiment of the present disclosure.
FIG. 29 shows a converter topology diagram when an AC port of a transformer is independent in a combined topology according to an embodiment of the present disclosure.
FIG. 30 shows a converter topology diagram when the AC port of the transformer is interconnected in a combined topology according to an embodiment of the present disclosure.
FIG. 31 shows a flowchart of a control method of a converter according to an embodiment of the present disclosure.

### DESCRIPTION OF THE EMBODIMENTS

In order to make objectives, technical schemes, and advantages of embodiments of the present disclosure clearer, the technical schemes in the embodiments of the present disclosure will be clearly and completely explained below with reference to accompanying drawings in the embodiments of the present disclosure. Obviously, the embodiments described are part embodiments of the present disclosure and not all embodiments. All other embodiments obtained by a person of ordinary skill in the art based on the embodiments of the present disclosure without creative efforts shall fall within a protection scope of the present disclosure.

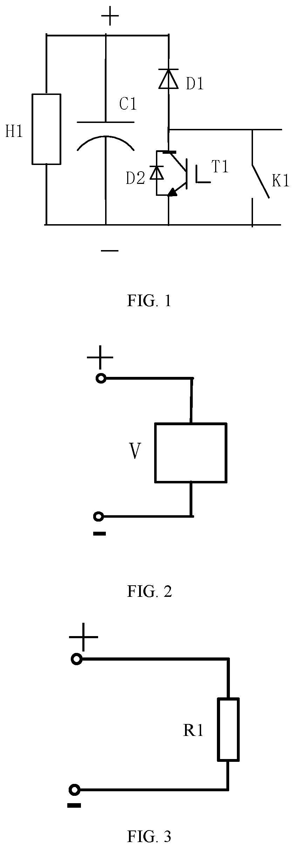

As shown in FIG. 1, in some embodiments of the present disclosure, the present disclosure provides a switch module, wherein the switch module comprises a power switch device T1, a diode D1, a voltage equalizing capacitor C1, and an energy dissipating element H1, wherein
the energy dissipating element H1 is connected in parallel to two ends of the voltage equalizing capacitor C1 (i.e., one end of the energy dissipating element H1 is connected to one end of the voltage equalizing capacitor C1, and the other end of the energy dissipating element H1 is connected to the other end of the voltage equalizing capacitor C1);
an anode of the diode D1 is connected to a collector of the power switch device T1, one end of the voltage equalizing capacitor C1 is connected to a cathode of the diode D1, the other end of the voltage equalizing capacitor C1 is connected to an emitter of the power switch device T1, and a diode D2 is connected in anti-parallel to the power switch device T1.

In some embodiments of the present disclosure, the power switch device T1 may be an insulated gate bipolar transistor (IGBT), an integrated gate-commutated thyristor (IGCT), a field-effect transistor (FET), and the like.

In some embodiments of the present disclosure, as shown in FIG. 1, the novel switch module further comprises a switch-type bypass element K1, one end of the switch-type bypass element K1 is connected to the collector of the power switch device T1, and the other end of the switch-type bypass element K1 is connected to the emitter of the power switch device T1.

The switch-type bypass element K1 has two functions. The first one is a bypass fault switch module to ensure a normal operation of other switch modules in a bridge arm; and a second one is a bypass corresponding black module (i.e., some switch modules fail to power on a control system for a certain reason, such as an energy acquisition power supply is damaged), wherein if the black module does not work normally due to the energy acquisition power supply, and a conventional controllable bypass switch does not have power to control the module to be bypassed, the overvoltage breakdown characteristic of a thyristor or a diode needs to be used to realize automatic bypass of the module.

The switch-type bypass element K1 is a combination of any one or more of a mechanical switch, a semiconductor switch, and a thyristor (for example, a parallel combination thereof), or K1 may not be configured. In particular, when T1 is the IGCT, K1 does not need to use the thyristor, because the IGCT has an over-voltage breakdown and a long-term through-flow characteristic of the thyristor, a bypass of the black module may be implemented.

In some embodiments of the present disclosure, the energy dissipating element H1 is any one or a combination of an energy acquisition power supply V, a first energy dissipating resistor R1, and a switchable device, wherein the energy acquisition power supply V is configured to obtain energy from the voltage equalizing capacitor C1 and supply power to a control circuit of the switch module.

As shown in FIG. 2, when the energy dissipating element H1 is the energy acquisition power supply V, a positive electrode + of the energy acquisition power supply V is connected to a positive electrode of the voltage equalizing capacitor C1, and a negative electrode - is connected to a negative electrode of the voltage equalizing capacitor C1.

As shown in FIG. 3, when the energy dissipating element H1 is a first energy dissipating resistor R1, one end of the first energy dissipating resistor R1 is connected to the positive electrode of the voltage equalizing capacitor C1, and the other end of the first energy dissipating resistor R1 is connected to the negative electrode of the voltage equalizing capacitor C1.

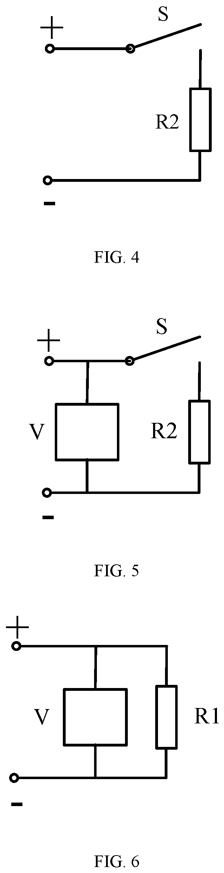

As shown in FIG. 4, when the energy dissipating element H1 is the switchable device, the switchable device comprises a second energy dissipating resistor R2 and a switch S (for example, the switch S may be a switch with a current that can be broken, such as a relay, a contactor, a circuit breaker, a semiconductor switch), one end of the switch S is connected to one end of the second energy dissipating resistor R2, the other end of the switch S is connected to the positive electrode of the voltage equalizing capacitor C1, the other end of the second energy dissipating resistor R2 is connected to the negative electrode of the voltage equalizing capacitor C1, and a switching control of the second energy dissipating resistor R2 may be achieved through the arranged switch S.

When the energy dissipating element H1 is a combination of the energy acquisition power supply V, the first energy dissipating resistor R1 and the switchable device, a structure of the combination includes but is not limited to the following combination form:
A first combination form: as shown in FIG. 5, it comprises the switchable device and the energy acquisition power supply V, wherein one end of the switch of the switchable device is connected to one end of the second energy dissipating resistor R2, and the other end is connected to a positive electrode + of the energy acquisition power supply V; the other end of the second energy dissipating resistor R2 is connected to a negative electrode - of the energy acquisition power supply V; and the positive electrode + of the energy acquisition power supply V is connected to a positive electrode of the voltage equalizing capacitor C1, and a negative electrode - is connected to a negative electrode of the voltage equalizing capacitor C1. In addition, in this combination form, the switch can also have the following changes:
One end of the switch of the switchable device is connected to the other end of the second energy dissipating resistor R2, and the other end of the switch S of the switchable device is connected to the negative electrode - of the energy acquisition power supply V; and one end of the second energy dissipating resistor R2 is connected to the positive electrode + of the energy acquisition power supply V.

A second combination form: as shown in FIG. 6, it comprises the first energy dissipating resistor R1 and the energy acquisition power supply V, wherein one end of the first energy dissipating resistor R1 is connected to a positive electrode + of energy acquisition power supply V, and the other end is connected to a negative electrode - of the energy acquisition power supply V, the positive electrode + of the energy acquisition power supply V is connected to a positive electrode of the voltage equalizing capacitor C1, and a negative electrode - is connected to a negative electrode of the voltage equalizing capacitor C1.

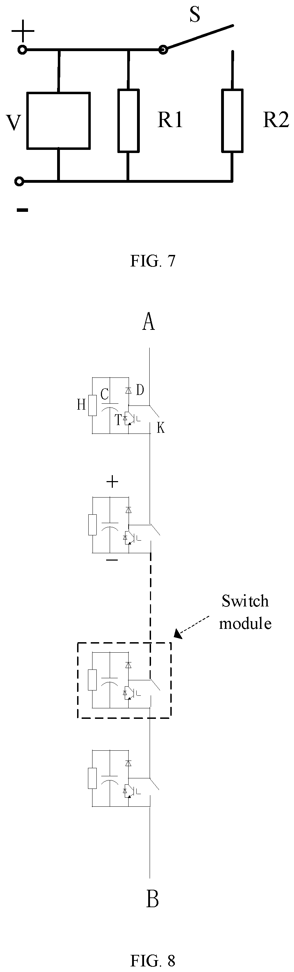

A third combination form: as shown in FIG. 7, it comprises the first energy dissipating resistor R1, the energy acquisition power supply V and the switchable device, wherein one end of the first energy dissipating resistor R1 is connected to a positive electrode + of the energy acquisition power supply V, the other end is connected to a negative electrode - of the energy acquisition power supply V, the positive electrode + of the energy acquisition power supply V is connected to a positive electrode of the voltage equalizing capacitor C1, and a negative electrode - is connected to a negative electrode of the voltage equalizing capacitor C1; and one end of the switch is connected to one end of the second energy dissipating resistor R2, the other end is connected to one end of the first energy dissipating resistor R1, and the other end of the second energy dissipating resistor R2 is connected to the other end of the first energy dissipating resistor R1. In addition, in this combination form, it can also have the following changes:
One end of the switch S is connected to the other end of the second energy dissipating resistor R2, the other end of the switch S is connected to the other end of the first energy dissipating resistor R1, and one end of the second energy dissipating resistor R2 is connected to one end of the first energy dissipating resistor R1.

In the present disclosure, since the diode D1 arranged in the switch module, it does not need to provide one power switch device T1. The applied number of the power switch devices is reduced, thereby effectively alleviating a problem of a large cost volume and a large weight of the bridge arm module in the MMC.

In the prior art, a converter formed by existing high-voltage and high-capacity power electronic power semiconductor devices is usually constructed based on another form of a valve string topology, that is, a device switch valve string topology. In the device switch valve string topology, the power electronic power semiconductor devices are directly connected in series to withstand a high voltage, which greatly reduces the amount of power electronic power semiconductor switches and capacitors. However, since the dynamic characteristics of the power electronic power semiconductor devices are different, a dynamic equalizing is difficult to be realized, and driving power supplies of the power electronic power semiconductor devices are difficult to achieve self-energy acquisition. Therefore, it is difficult to apply in an engineering practice.

Therefore, based on the problem in the prior art, as shown in FIG. 8, the present disclosure further provides a switch valve string, wherein the switch valve string comprises a terminal A, a terminal B, and n switch modules described as above, wherein the n switch modules are sequentially connected in series to form a bridge arm, and are disposed between the terminal A and the terminal B, so that the switch valve string of the present disclosure may be formed.

In some embodiments of the present disclosure, the n switch modules are sequentially connected in series in a following manner:
a collector in a first power switch device T1 is connected to the terminal A, and an emitter in the n^{th} power switch device T1 is connected to the terminal B; and
in the remaining power switch devices T1, a collector in a next power switch device T1 is connected to an emitter in a previous power switch device T1.

In some embodiments of the present disclosure, based on the above switch valve string (i.e., the switch valve string adopts the above switch valve string), a control method of a switch module is further provided, wherein the control method comprises:
Step S1: achieving a normal operating condition of the switch valve string, wherein the normal operating condition is: configuring rated voltages of a switch module N1 and the voltage equalizing capacitor C, so that N1 * Uₛₘ ≥ a voltage peak value Umax between the terminals A and B, i.e., N1 * Uₛₘ ≥ Uₘₐₓ.
Step S2: after the switch valve string achieve the normal operating condition, in order to meet an voltage equalizing control requirement and improve the reliability of the switch valve, reconfiguring N2 modules between the two terminals A and B of the switch valve string, wherein N2 ≥ 1; and after the N2 switch modules are additionally added, updating the number of the switch modules of the bridge arm to N1 + N2.
Step S3: sorting voltages of voltage equalizing capacitors C1 of N1 + N2 switch modules of the switch valve string.
Step S4: after sorting, maintaining the power switch devices T1 turned on for the first N/2 switch modules with voltages from high to low, controlling power switch devices T1 of the remaining N1 switch modules to be turned on or turned off as required to achieve equalizing control of the voltage equalizing capacitors in all the switch modules.
Step S 5: repeating steps S3 to S5 to maintain long-term equalizing of the voltage equalizing capacitors in all the switch modules.

In some embodiments of the present disclosure, it needs to understand that Uₘₐₓ is a voltage peak value between the two terminals A and B of the switch valve string; the Uₛₘ is a voltage rated value of a voltage equalizing capacitor C of a single switch module; and N1 is the number of the switch modules in the switch valve string before the N2 switch modules are configured.

In this embodiment, the normal operation of the switch valve string topology must satisfy N1 * Uₛₘ ≥ Uₘₐₓ, because when the above condition is not established, after the switch valve string is turned off (the power switch device T1 is turned off), if the voltage peak value Uₘₐₓ of the terminals A and B is greater than or equal to N1 * Uₛₘ, two ends of the terminals A and B still have current flowing, which cannot achieve the effect of turning off the bridge arm, and thus the normal operation cannot be realized.

According to the equalizing control method provided by the present invention, a power switch device T1 of a switch module with a higher voltage is always in a triggered state, and the voltage equalizing capacitor C1 cannot be charged, and the capacitor voltage would be reduced. In a switch module with a lower voltage, the power switch device T1 is turned on and off according to needs, a bridge arm current of the switch valve string charges the voltage equalizing capacitor C1 through the diode D1 during a time period when the power switch device T1 is turned off, and the voltage of the voltage equalizing capacitor C1 rises. Therefore, by the above method, equalizing of the voltage equalizing capacitor C1 can be realized without detecting a direction of the bridge arm current, and the control is simple and effective.

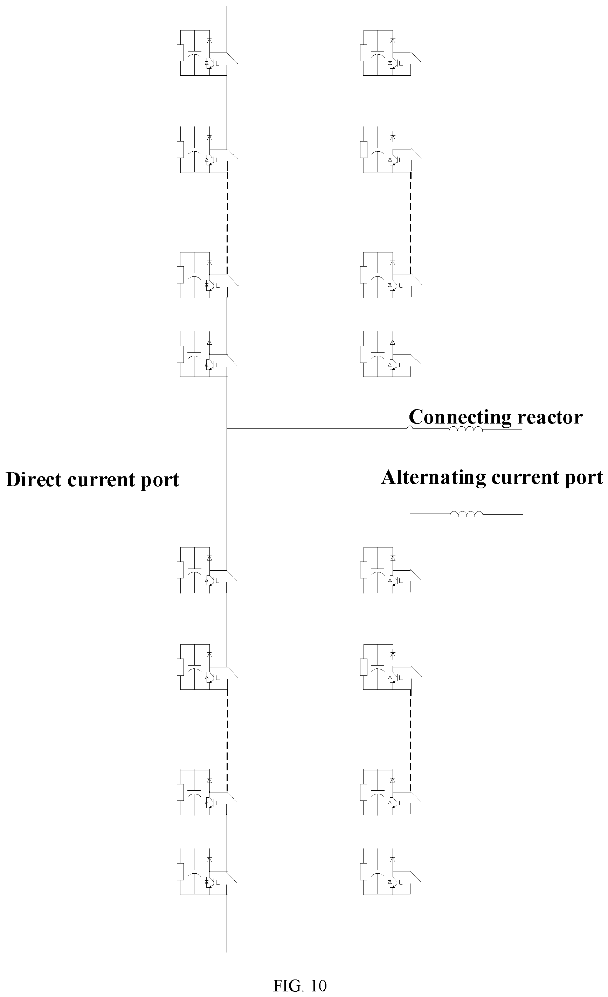

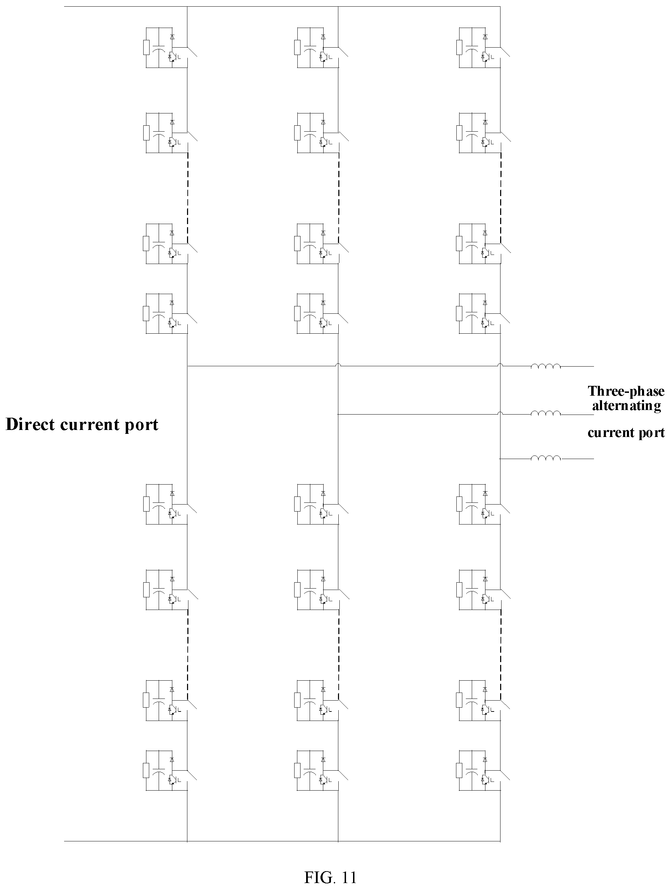

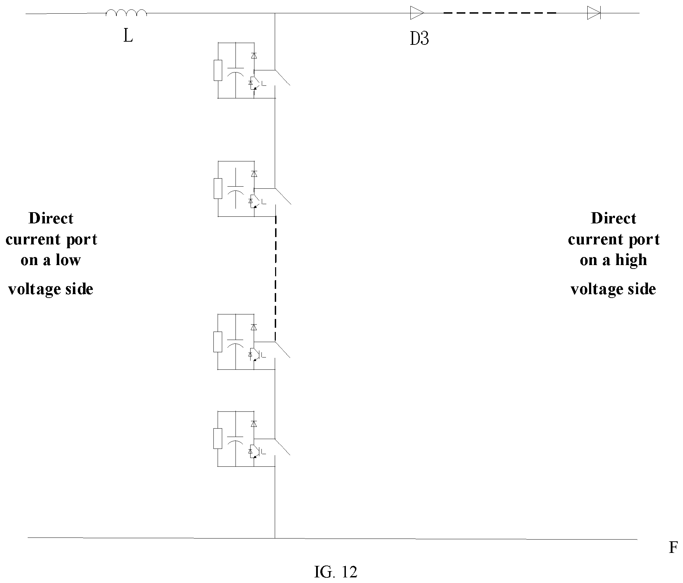

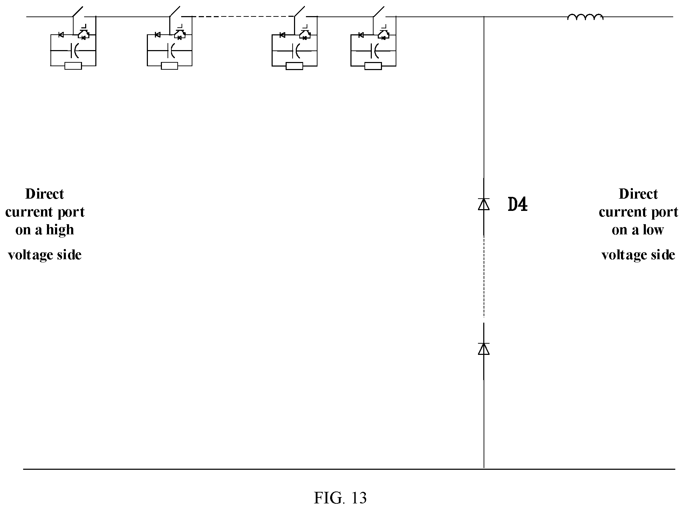

In some embodiments of the present disclosure, based on the above switch valve string, various types of converter topologies as shown in FIG. 10 to FIG. 13 may be constituted. Specifically, for example, it may constitute a single-phase AC/DC circuit (as shown in FIG. 10), a three-phase AC/DC circuit (as shown in FIG. 11), a BOOST converter (as shown in FIG. 12), a BUCK converter (as shown in FIG. 13), and the like which are suitable for medium and high voltage occasions.

Exemplary descriptions of the topologies of the above single-phase AC/DC circuit, the three-phase AC/DC circuit, the BOOST converter, and the BUCK converter are described below.
1. Single-phase AC/DC circuit:
   As shown in FIG. 10, the single-phase AC/DC circuit comprises two switch valve strings as shown in FIG. 8, a connection reactor is connected to a connecting midpoint of each of the two switch valve strings, an alternating current port is formed between the connection reactors, and a direct current port is formed between the terminal A and the terminal B of one switch valve string.

The connecting midpoint of the bridge arm refers to that the bridge arm comprises an upper bridge arm and a lower bridge arm which are connected in series, each of the upper bridge arm and the lower bridge arm comprises n/2 switch modules connected in series, and the upper bridge arm and the lower bridge arm are connected through the connecting midpoint.

In addition, in the upper bridge arm of the bridge arm, a collector of a power switch device T1 in a first switch module serves as the other end of the upper bridge arm, an emitter of a power switch device T1 in the last switch module serves as one end of the upper bridge arm, and in power switch devices T1 of the remaining switch modules, a collector of a next power switch device T1 is connected to an emitter of a previous power switch device T1.

In addition, in the lower bridge arm of the bridge arm, a collector of a power switch device T1 in a first switch module serves as one end of the lower bridge arm, an emitter of a power switch device T1 in the last switch module serves as another end of the lower bridge arm, and in power switch devices T1 of the remaining switch modules, a collector of a next power switch device T1 is connected to an emitter of a previous power switch device T1.

In each bridge arm, the other end of the upper bridge arm serves as one end of the whole bridge arm and is connected with the terminal A, the other end of the lower bridge arm serves as the other end of the whole bridge arm and is connected with the terminal B, and one end of the upper bridge arm is connected with one end of the lower bridge arm through the connecting midpoint.

### 2. Three-phase AC/DC circuit:

As shown in FIG. 11, the three-phase AC/DC circuit comprises three switch valve strings as shown in FIG. 8, a connection reactor is connected to a connection midpoint of each of the three switch valve strings, a three-phase alternating current port is formed among the three connection reactors, wherein a direct current port is formed between the terminal A and the terminal B of one switch valve string.

### 3. Boost Converter:

As shown in FIG. 12, the BOOST converter comprises one switch valve string as described above and shown in FIG. 8, and the terminal A of the switch valve string is connected to smoothing reactor L and a plurality of diodes D3, wherein the plurality of diodes D3 are connected in series; in the plurality of diodes D3, an anode of a first diode D3 is connected to the terminal A of the switch valve string, a high-voltage side direct current port is formed between a cathode of the last diode D3 and the terminal B of the switch valve string, and in the remaining diodes D3, a cathode of a next diode D3 is connected to an anode of a previous diode D3. One end of the smoothing reactor L is connected to the terminal A of the switch valve string, and a low-voltage side direct current port is formed between the other end of the smoothing reactor L and the terminal B of the switch valve string.

### 4. BUCK Converter:

As shown in FIG. 13, the BUCK converter comprises a switch valve string as described above and shown in FIG. 8, and further comprises a connection reactor and a plurality of diodes D4, wherein in the plurality of diodes D4, a cathode of a first diode D4 is connected to the terminal B of the switch valve string, a high-voltage side direct current port is formed between an anode of the last diode D4 and the terminal A of the switch valve string, and in the remaining diodes D4, a cathode of a next diode D4 is connected to an anode of a previous diode. One end of the connection reactor is connected to the terminal B of the switch valve string, and a low-voltage side direct current port is formed between the other end of the connection reactor and the anode of the last diode D4.

In the present disclosure, based on the topology of the converter of the switch valve string, there is no need to use sub-modules such as a half-bridge and a full-bridge required for a modular topology, and the number of power switch devices is greatly reduced. The current of the diode D1 is very small, so the cost is low and the volume is small. Based on the topology of the converter of the switch valve string, the voltage equalizing capacitor C1 does not absorb a fundamental frequency and frequency doubling fluctuation power existing in a conventional modular topology in the alternating current application, so the capacitance is very small. Based on the topology of the converter of the switch valve string, the voltage equalizing capacitor C1 is blocked by the diode D1 through a discharge path of the power switch device T1, so that the voltage equalizing capacitor C1 is not short-circuited and discharges when the power switch device T1 is turned on, generates power loss and threatens the safety of the device and the capacitor, and based on this, the value of the voltage equalizing capacitor C1 can be increased, a voltage equalizing effect is much better than that of a traditional switch topology, and the security is better. Based on the topology of the converter of the switch valve string, a relatively large voltage equalizing capacitor C1 can maintain a stable capacitor voltage for a long time, and can supply power to the self-energy acquisition power supply (energy acquisition power supply) to solve the self-energy acquisition problem of the switch topology.

In the prior art, the voltage source type converter based on devices connected in series also has the characteristics of high voltage resistance and large capacity, and the bridge arm formed by a straight string of the devices, so it saves half of the number of power semiconductor switching devices compared with the bridge arm consisted of the MMC half-bridge modules, and the cost is greatly reduced. There is no need for a module capacitor, and the volume is greatly reduced. However, difference between the dynamic and static characteristics of the power switch device results in inconsistent voltages at the two ends of the series connected devices, thereby causing the power switch device to be extremely prone to an over-voltage damage. To this end, the voltage consistency of the power switch device can be ensured as much as possible in a manner that the two ends of the power switch device are connected in parallel with a voltage equalizing capacitor and a voltage equalizing resistor.

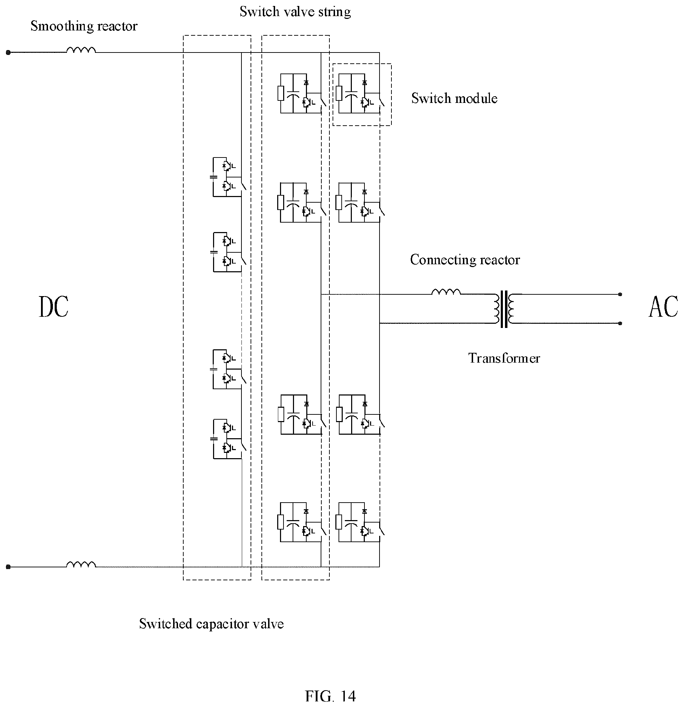

However, when the power switch device is turned on, the voltage equalizing capacitor is short-circuited and discharges through the turned-on power switch device, which not only causes energy loss, but also threatens the safety of the power switch device and the voltage equalizing capacitor as a result of a large short-circuited current. In addition to the above problems, the VSC connected in series with the power switch device can only output two levels, and must rely on a higher switching frequency for modulation, so as to reduce a volume of the filter. Therefore, the loss is very large, and dv/dt is large, a voltage stress to a circuit element is large, and insulation and heat dissipation level requirements are high. In addition, since there is no module capacitor providing a stable direct current voltage, it is difficult to achieve self-energy acquisition of the device-driven power supply and it is difficult for engineering. Therefore, in the prior art, the MMC has a large volume and a high cost, and the VSC with devices connected in series has a problem of low reliability and large loss. Based on the problem in the prior art, as shown in FIG. 14, the present disclosure further provides a converter, wherein the converter comprises a switch valve and a switched capacitor valve, and the switched capacitor valve is connected (in parallel) to the switch valve, wherein
the switch valve comprises a plurality of switch valve strings connected in parallel, wherein the switch valve strings adopt the switch valve string shown in FIG. 8. The novel switch valve rectifies the alternating current into a pulsating direct current, and the switched capacitor valve outputs the pulsating direct current. The switch valve is combined with the switched capacitor valve to realize conversion of the alternating current and the direct current.

In some embodiments of the present disclosure, the switched capacitor valve comprises a plurality of switched capacitor modules connected in series, and an energy dissipating elements H2 is connected in parallel to each of the switched capacitor modules. For example, the energy dissipating element H2 may also be any one or a combination of the energy acquisition power supply, the first energy dissipating resistor, and the switchable device as described above, and the switched capacitor module is a combination of any one or more of a half-bridge module, a full-bridge module, and a hybrid module consisted of a power semiconductor switch T2 and a capacitor C2 (for example, an in-series connection combination thereof).

In some embodiments of the present disclosure, T2 may be an IGBT, an IGCT, an FET, or the like. In addition, in some embodiments of the present disclosure, the switched capacitor module is connected with a bypass switch K2, and the switch-type bypass element K2 also has two functions. The first one is a bypass fault switched capacitor module to ensure normal operations of other switched capacitor modules; and the second one is a bypass corresponding black module. For example, the bypass switch K2 is any one or a combination of more of a mechanical switch, a semiconductor switch, and a thyristor (for example, a parallel combination thereof), or in some embodiments of the present disclosure, the bypass switch K2 may also not be configured.

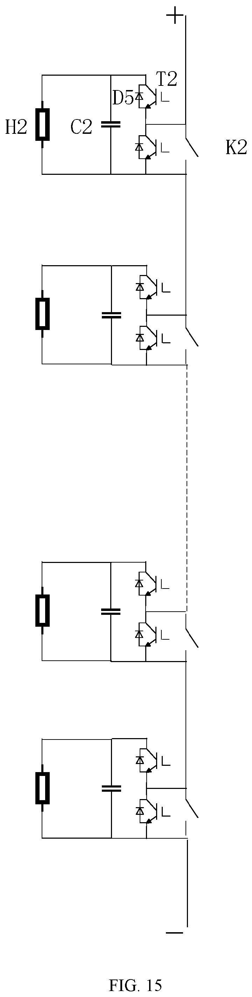

In some embodiments of the present disclosure, as shown in FIG. 15, when the switched capacitor module is a half-bridge module, the half-bridge module comprises a capacitor C2 and two power switch devices T2, wherein an emitter of one power switch device T2 (hereinafter referred to as an upper switching transistor T2) is connected to a collector of the other power switch device T2 (hereinafter referred to as a lower switching transistor T2), one end of the capacitor C2 is connected to a collector of the one power switch device T2, the other end of the capacitor C2 is connected to an emitter of the lower switching transistor T2, wherein a collector of the upper switching transistor T2 in a first half-bridge module serves as one end of the corresponding switched capacitor module, and an emitter of the lower switching transistor T2 in the last half-bridge module serves as the other end of the corresponding switched capacitor module. In the remaining half-bridge modules, a collector of an upper switching transistor T2 in a next half-bridge module is connected to an emitter of a lower switching transistor T2 in a previous half-bridge module.

A diode D5 is connected in anti-parallel to each power switch device T2. For the bypass switch K2 connected to the switched capacitor module, one end thereof is connected to the collector of the lower switching transistor T2, and the other end thereof is connected to the emitter of the lower switching transistor T2. The energy dissipating element H2 is connected in parallel to the capacitor C2.

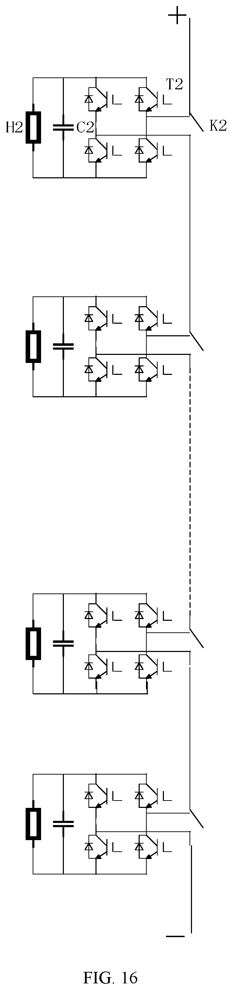

As shown in FIG. 16, when the switched capacitor modules are a plurality of full-bridge modules, each of the full-bridge modules has a first bridge arm, a second bridge arm and a capacitor C2, wherein both the first bridge arm and the second bridge arm comprise two power switch devices T2; the emitter of the upper switching transistor T2 of the first bridge arm is connected to the collector of the lower switching transistor T2 of the first bridge arm through a connection point; and the emitter of the upper switching transistor T2 of the second bridge arm is connected to the collector of the lower switching transistor T2 of the second bridge arm through a connection point. The collector of the upper switching transistor T2 of the first bridge arm is connected to the collector of the upper switching transistor T2 of the second bridge arm; and the emitter of the lower switching transistor T2 of the first bridge arm is connected to the emitter of the lower switching transistor T2 of the second bridge arm.

One end of the capacitor C2 is connected to the collector of the upper switching transistor T2 of the second bridge arm, and the other end of the capacitor C2 is connected to the emitter of the lower switching transistor T2 of the second bridge arm; a connection point of the first bridge arm in the first full-bridge module serves as one end of the corresponding switched capacitor module, and a connection point of the second bridge arm in the last full-bridge module serves as the other end of the corresponding switched capacitor module. In the remaining full-bridge modules, a connection point of a first bridge arm in a next full-bridge module is connected to a connection point of a second bridge arm in a previous full-bridge module.

The bypass switch K2 is connected to the switched capacitor module, and two ends of the bypass switch K2 are connected to two connection points of the switched capacitor module. The energy dissipating element H2 is connected in parallel to the capacitor C2. A diode D5 is connected in anti-parallel to each power switch device T2.

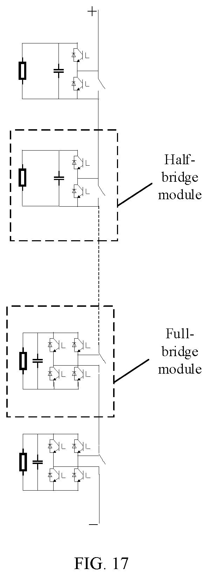

In some embodiments of the present disclosure, as shown in FIG. 17, the switched capacitor valve comprises a hybrid module, which comprises a first number of half-bridge modules and a second number of full-bridge modules, wherein the whole obtained by sequentially connecting the first number of half-bridge modules in series and the whole obtained by sequentially connecting the second number of full-bridge modules in series are connected in series.

When the first number and the second number are both 1 (not shown, and in FIG. 17, it is shown that the first number and the second number are both greater than 1), the emitter of the lower switching transistor T2 in the half-bridge module is connected to the connection point of the first bridge arm in the full-bridge module, the collector of the lower switching transistor T2 in the half-bridge module serves as one end of the switched capacitor valve, and the connection point of the second bridge arm in the full-bridge module serves as the other end of the switched capacitor valve. In addition, in the half-bridge module, the collector of each power switch device T2 is further connected to one end of the bypass switch K2, the emitter of each power switch device T2 is further connected to the other end of the bypass switch K2, and in the full-bridge module, two ends of the bypass switch K2 are respectively connected to two connection points of the full-bridge module.

When the first number and the second number are both greater than 1, in the first number of half-bridge modules connected in series and the second number of half-bridge modules connected in series, the emitter of the lower switching transistor T2 in the last half-bridge module is connected to the connection point of the first bridge arm in the first full-bridge module, the collector of the lower switching transistor T2 in the first half-bridge module serves as one end of the switched capacitor valve, and the connection point of the second bridge arm in the last full-bridge module serves as the other end of the switched capacitor valve. In the remaining half-bridge modules, a collector of a lower switching transistor T2 in a next half-bridge module is connected to an emitter of a lower switching transistor T2 in a previous half-bridge module. In the remaining full-bridge modules, a connection point of a first bridge arm in a next full-bridge module is connected to a connection point of a second bridge arm in a previous full-bridge module.

In some embodiments of the present disclosure, the converter further comprises a transformer and a reactor, both the reactor and the transformer are connected to the switch valve, wherein the switched capacitor valve is connected between the reactor and the switch valve or between the switch valve and the transformer. The switch valve and the switched capacitor valve may be one, or may be multiple ones which are connected in parallel.

The following is described with reference to FIG. 14.

In FIG. 14, the number of the switch valve and the number of the switched capacitor valve are both 1, the switch valve has two bridge arms connected in parallel, the switched capacitor valve is connected between the reactor and the switch valve, that is, one end of the switched capacitor valve is connected to one end of one bridge arm in the switch valve, and the other end of the switched capacitor valve is connected to the other end of one bridge arm in the switch valve.

In FIG. 14, the number of the reactors (i.e., a smoothing reactor in FIG. 14) are two, one end of one reactor is connected to one end of the switched capacitor valve, and one end of the other reactor is connected to the other end of the switched capacitor valve. In addition, in some embodiments of the present disclosure, the converter comprises two ports: an AC (alternating current) port and a DC (direct current) port, wherein the other end of one reactor and the other end of the other reactor form a DC port of the converter.

In some embodiments of the present disclosure, two ends of winding at one side of the transformer are respectively connected to two connection midpoints of the two bridge arms. In addition, the converter further comprises a connection reactor, and the connection reactor may only adopt a leakage reactor of the transformer, or may be externally connected in series to a part of reactor (i.e., one end of the winding at one side of the transformer is connected to a connection midpoint of one of the bridge arms of the switch valve through the connection reactor).

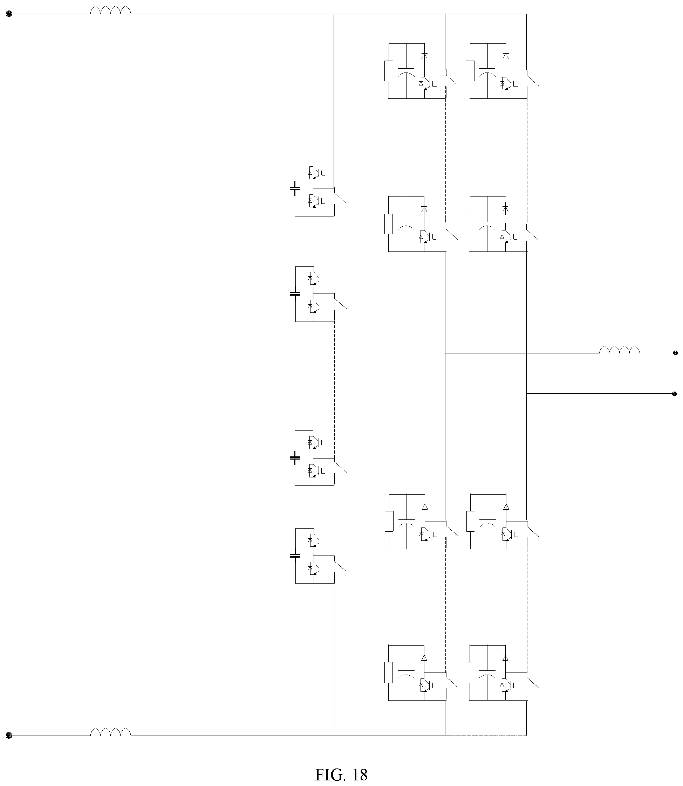

In some embodiments of the present disclosure, an AC port is formed at two ends of the winding at the other side of the transformer. In addition, it should be noted that, in the converter, a transformer may be provided, or as shown in FIG. 18, no transformer is provided.

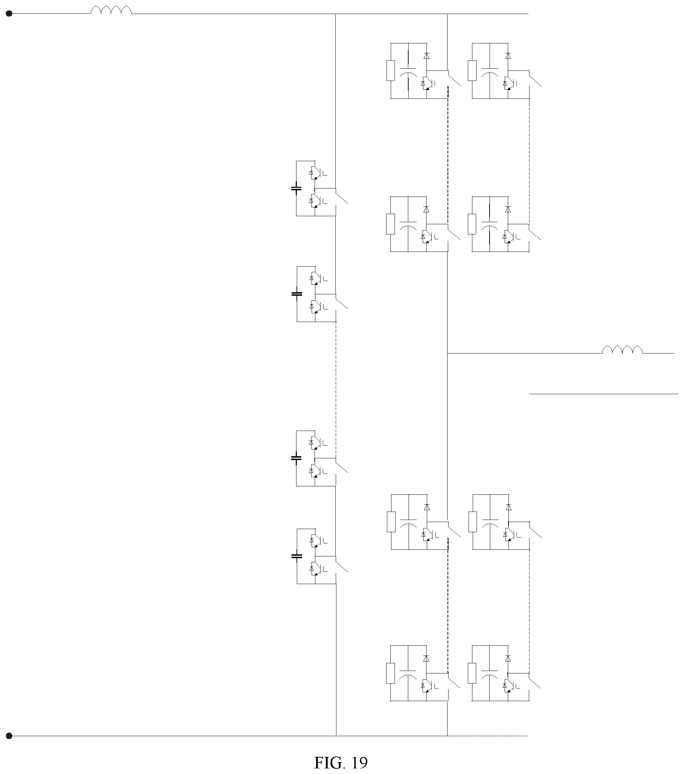

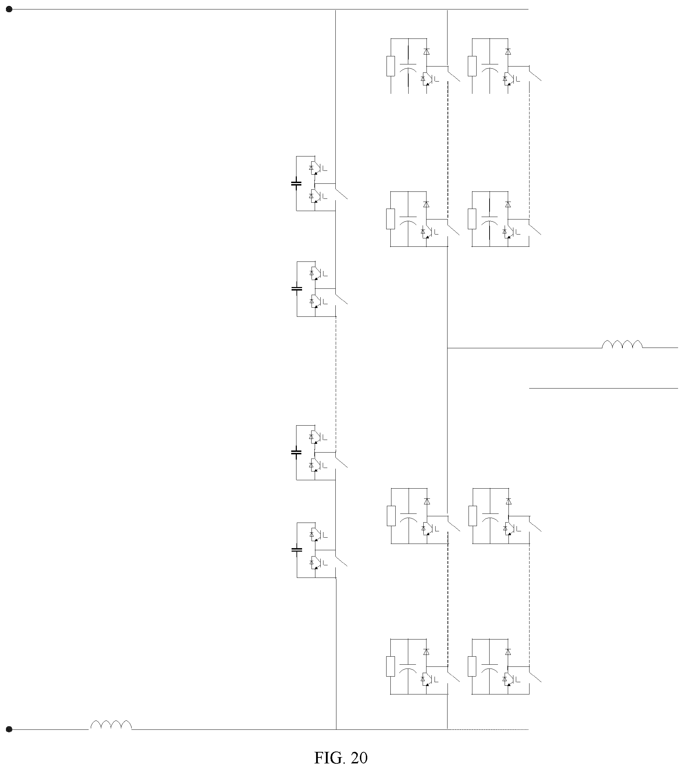

In some embodiments of the present disclosure, on the basis that the converter is not provided with the transformer and the energy dissipating element H2 is not arranged on the switched capacitor module of the switched capacitor valve in the converter, the reactor may be disposed at positive and negative electrodes of the DC port of the converter (as shown in FIG. 18), or may be arranged separately on the positive electrode (as shown in FIG. 19), or arranged separately on the negative electrode (as shown in FIG. 20).

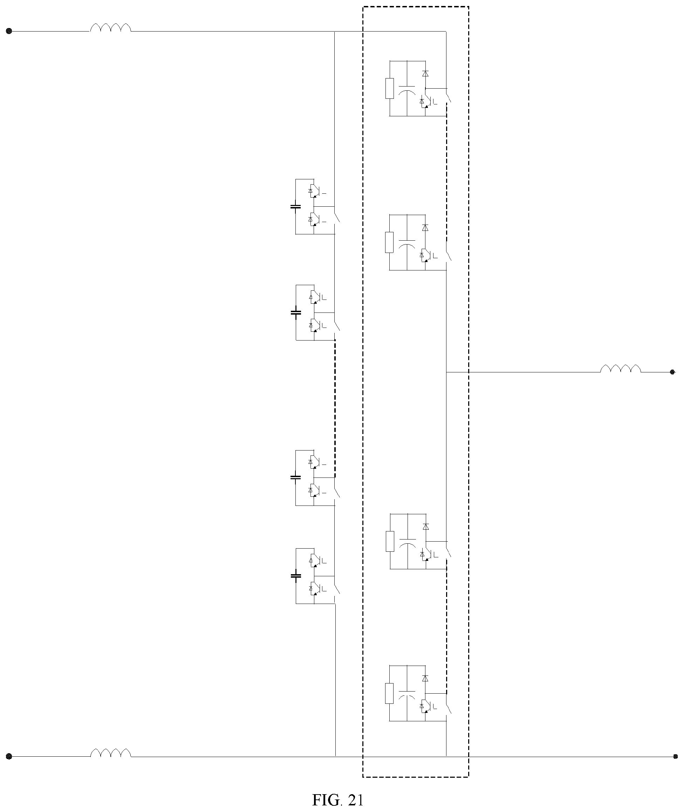

In some embodiments of the present disclosure, the converter also has some variant single-phase topology schemes. In the converter as shown in FIG. 21, the switch valve adopts a half-bridge structure, i.e., the switch valve comprises a bridge arm, on which the switch module adopts the switch module in FIG. 14, and in the converter in FIG. 21, no energy dissipating element H2 is arranged on the switched capacitor module in the switched capacitor valve; and no transformer is arranged in the converter in FIG. 21, and a connection reactor is connected to the connection midpoint on the bridge arm of the switch valve.

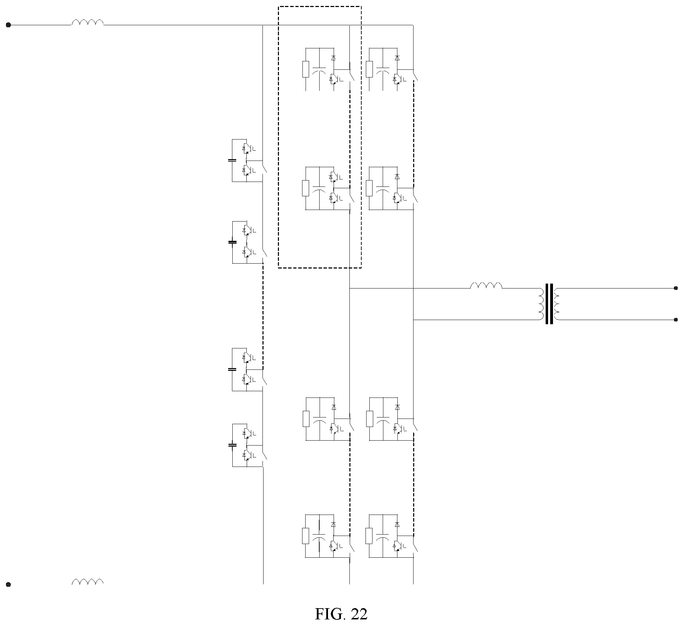

In the converter in FIG. 22, the switch valve is based on a transformation of the converter in FIG. 14, wherein different from FIG. 14, in the converter of FIG. 22, the diodes D1 of part or all of the switch modules on one or more bridge arms on the bridge arm of the switch valve are replaced by power switch devices T1, or some or all of the switch modules on one or more bridge arms on the bridge arm of the switch valve are a full-bridge sub-module (not shown in FIG. 22) consisted of four power switch devices T1 (also the power switch device T1 is connected in anti-parallel to the diodes D1), and in the converter in FIG. 22, no energy dissipating element H2 is provided on the switched capacitor module in the switched capacitor valve.

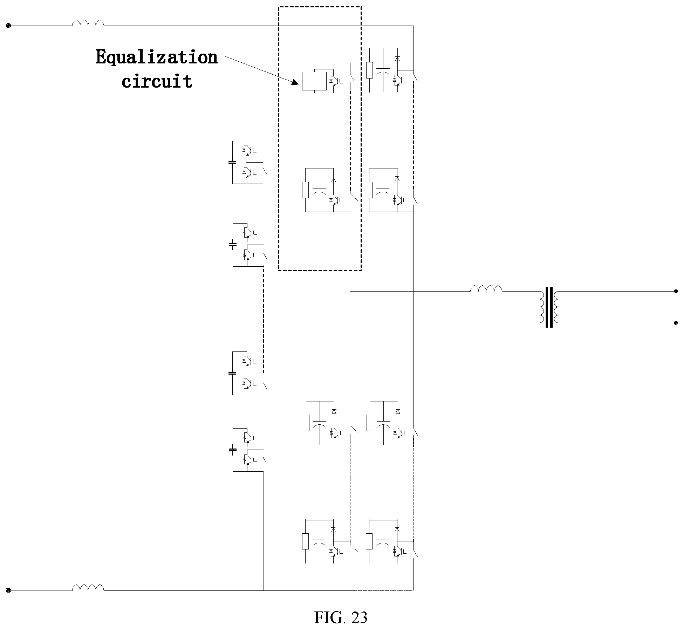

The converter in FIG. 23 is based on a modified topology diagram of the converter in FIG. 22, i.e., in the converter in FIG. 22, only one power switch device T1 is included in the part of the switch modules, and an anode and a cathode of the power switch device T1 are connected in parallel to a voltage equalizing circuit, for example, the voltage equalizing circuit comprises a capacitor and a resistor connected in parallel to the power switch device T1, for example, two ends of the device are connected in parallel to a voltage equalizing capacitor and a voltage equalizing resistor.

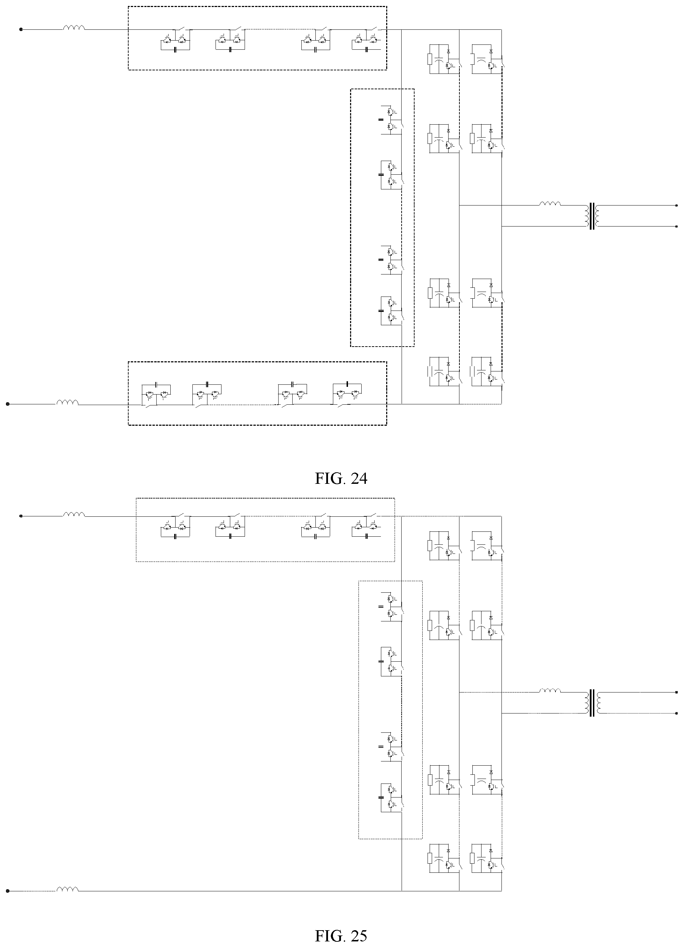

The converter in FIG. 24 is based on a first transformation of the converter in FIG. 22, i.e., the positive and negative electrodes of the DC port of the converter in FIG. 22 are also connected in series with the switched capacitor valve, wherein a manner of the in-series connection is as follows: one end of the switched capacitor valve connected in series with the positive electrode of the DC port is connected to one end of the corresponding reactor, the other end thereof is connected to one end of the bridge arm of the switch valve, one end of the switched capacitor valve connected in series with the negative electrode of the DC port is connected to one end of the corresponding reactor, and the other end thereof is connected to the other end of the bridge arm of the switch valve.

The converter in FIG. 25 is based on a second transformation of the converter in FIG. 22, i.e., the negative electrode of the DC port of the converter in FIG. 22 is also connected in series with the switched capacitor valve.

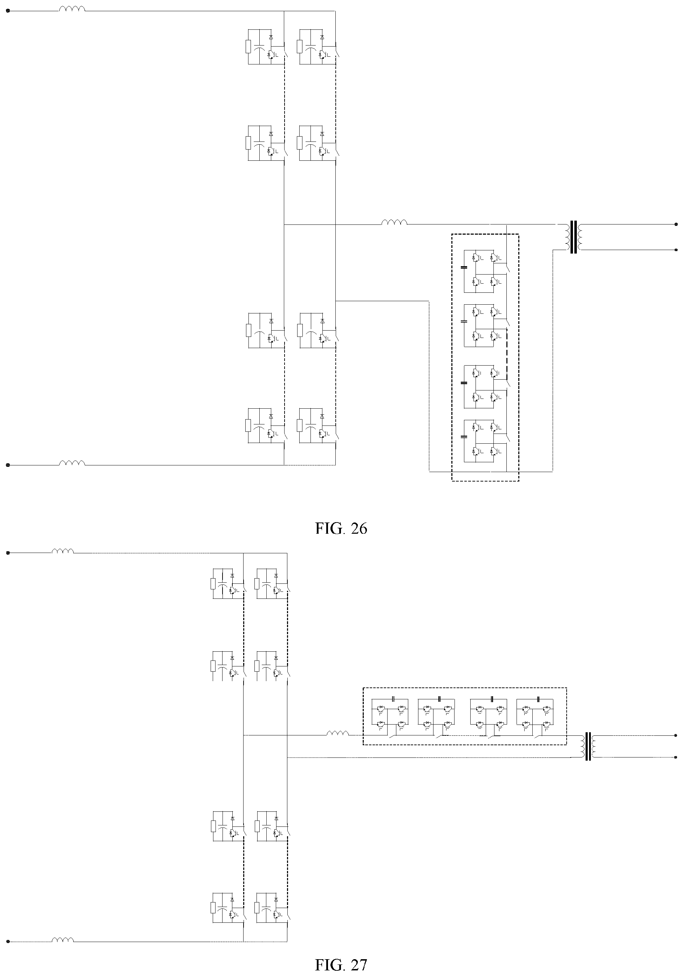

The converter in FIG. 26 is based on a third transformation of the converter in FIG. 22, i.e., the switched capacitor valve (the switched capacitor module in the switched capacitor valve is a full-bridge module) is arranged in parallel to the winding at one side of the transformer of the converter in FIG. 22, and a manner of the in-parallel connection is as follows: one end of the switched capacitor valve is connected to one end of the connection reactor, the other end of the connection reactor is connected to the connection midpoint of one of the bridge arms of the switch valve, and the other end of the switched capacitor valve is connected to the connection midpoint of the other bridge arm of the switch valve. No switched capacitor valve is connected in parallel in the switch valve string.

The converter in FIG. 27 is based on a transformation of the converter in FIG. 26, i.e., the switched capacitor valve of the converter in FIG. 26 is connected in series to the winding at one side of the transformer, and a manner of the in-series connection is as follows: one end of the switched capacitor valve is connected to one end of the connection reactor, and the other end of the connection reactor is connected to one end of the winding at one side of the transformer.

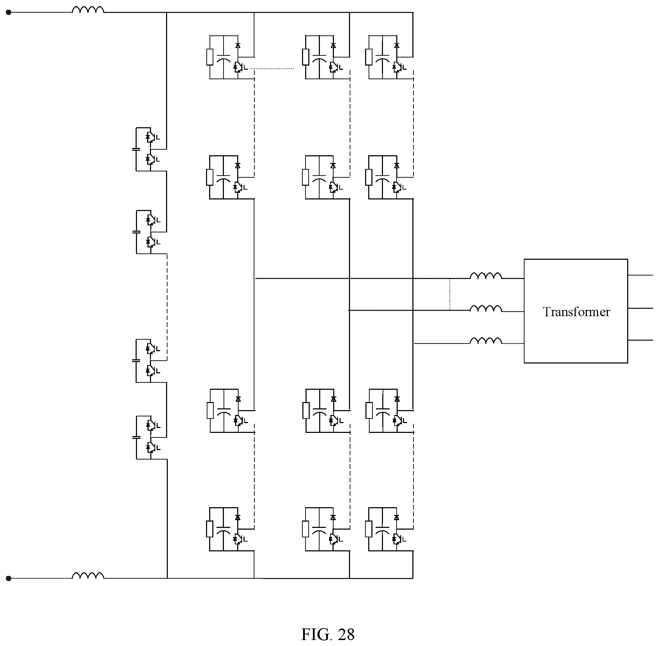

In some embodiments of the present disclosure, the converter also has a multi-phase topology scheme, as shown in FIG. 28. In FIG. 28, the switch valve has three bridge arms, each of the bridge arms is the same as the bridge arm of the switch valve in FIG. 14, the number of the switched capacitor valve is one, one end of the switched capacitor valve (the switched capacitor module in the switched capacitor valve is a half-bridge module) is connected to the terminal A of the switch valve string of the switch valve in FIG. 28, the other end of the switched capacitor valve is connected to the terminal B of the switch valve string in FIG. 28, and no energy dissipating element H2 is arranged in the switched capacitor valve. In FIG. 28, the connection midpoints of the three bridge arms of the switch valve are connected to a transformer by connection reactors. Two ends of the switched capacitor valve in FIG. 28 are respectively connected to a reactor.

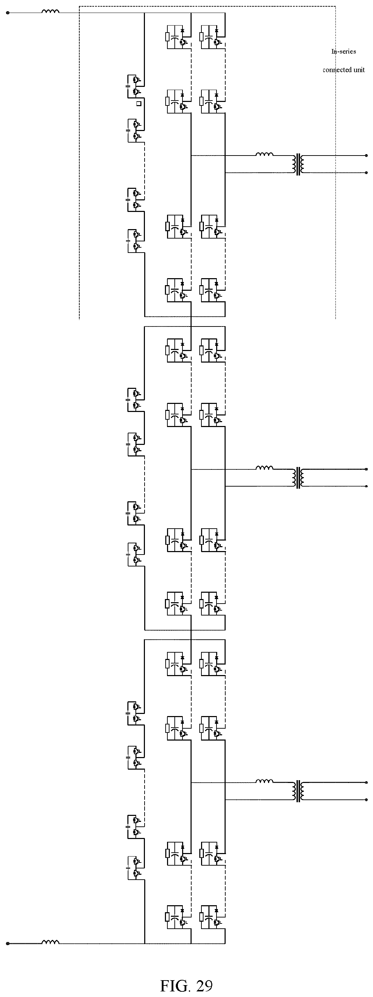

In some embodiments of the present disclosure, further provided is a combined converter, wherein the combined converter comprises at least two converters connected in series, at least one of the converters is the above converter, i.e., the single-phase or multi-phase topology scheme can be combined in an in-series connection form to obtain a combined topology (i.e., a combined converter topology), as shown in FIG. 29. In the combined topology, the AC port of the transformer in each in-series connected unit (i.e., each converter connected in series as an in-series connected unit) may be independent or connected together, i.e., a star connection or an angle connection. When the AC port of the transformer of each in-series connected unit (for example, there are three in-series connected units) is independent, the in-series connected unit may be the converter topology in the single-phase topology scheme mentioned above (for example, the converter of the topology representation in FIG. 14), but a negative electrode of a DC port of a first in-series connected unit may not comprise the reactor, and a positive electrode of a DC port of the last in-series connected unit may not comprise the reactor. In the remaining in-series connected units, both positive electrode and negative electrodes of the DC ports may not comprise a reactor. The in-series connected units are connected in series in a following manner: one end of the switched capacitor valve in a next in-series connected unit is connected to the other end of the switched capacitor valve in a previous in-series connected unit.

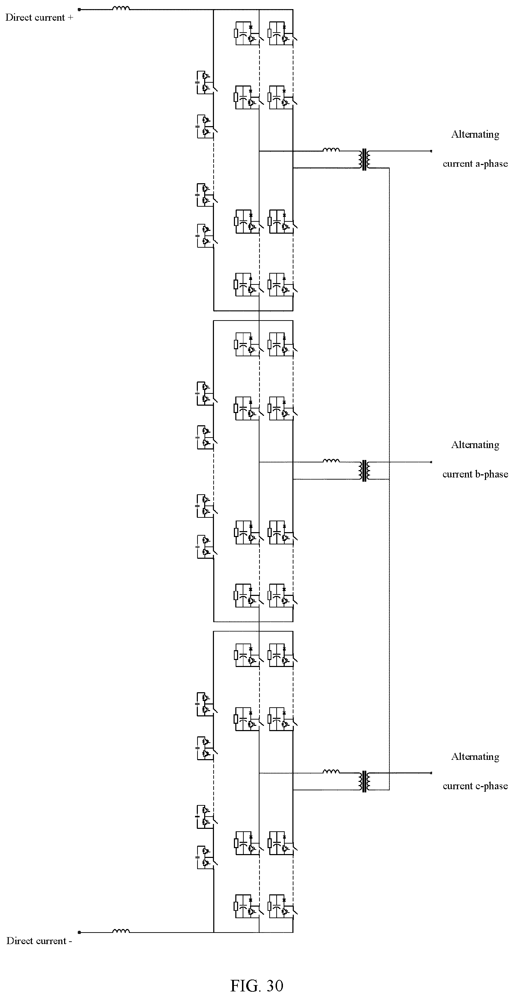

The topology scheme shown in FIG. 30 is a topology scheme of 500kVac/2000MW (i.e., the AC voltage is 500kV, and the transmission power is 2000WM). In this topology scheme, when the AC ports of the transformer of all in-series connected unit are interconnected, at most one in-series connected unit can contain no transformer. The topology scheme shown in FIG. 30 is different from that shown in FIG. 29 in that each AC port of the transformer is interconnected, i.e., one ends of the AC ports of all transformers are connected to each other, and the other ends of the AC ports of all transformers are alternating current a-phase, alternating current b-phase and alternating current c-phase respectively.

For a flexible direct current power transmission system with an alternating current voltage of 500kV and transmission power of 2000WM, if fully controlled power switch devices with a direct current voltage of 2.1kV are used and redundancy is not considered: when a modular multilevel converter scheme is adopted, 476 modules are required for in-series connection for a voltage of 1000kV in each bridge arm; and since the modular multilevel converter has 6 bridge arms, each module of the bridge arms needs two power switch devices, a total of 476*6*2=5712 power switch devices are required. The capacitor capacity of each module calculated by energy fluctuation of the bridge arm is 4.55mF, and a total of 476*6=2856 capacitors are needed.

When the topology scheme in FIG. 30 is adopted, the voltage of each bridge arm (the bridge arm here refers to an upper or lower bridge arm on the bridge arm of the switch valve) is only 453kV, and only 216 switch modules are required for in-series connection. In addition, there are only three bridge arms obtained by connecting in-series the switched capacitor modules consisted of two power switch devices T2, and six bridge arms obtained by connecting in-series the switch modules consisted of one power switch device T1, so a total number of the power switch devices required is 216*(3*2+12)=3888. The capacitor capacity of each module calculated by energy fluctuation of the bridge arm is only 2.34mF, and a total of 216*3=648 capacitors are needed.

Therefore, when the topology scheme in FIG. 30 is adopted, compared with the traditional scheme, the total number of fully controlled power switch devices is only 68% of the original value, and the total capacitance value is only 11.7% of the original value. A total cost and volume of the converter valve are greatly optimized.

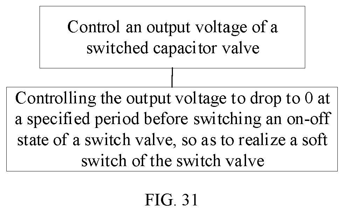

In another aspect, as shown in FIG. 31, the present disclosure also provides a control method of a converter, the converter adopts the above converter, and the control method comprises:
controlling the output voltage of the switched capacitor valve to drop to 0 at a specified period before the on-off state of the switch valve is switched to realize a soft on-off of the switch valve.

In the converters in the present disclosure:
a. Compared with the half-bridge sub-module of the MMC, the switch module has the following characteristics:
   1) There is only one fully controlled power switch device T1 in the switch module, which has a low cost, a small volume and a low weight;
   2) An effective value of the steady state current of the diode D1 in the switch module is ≈0, which is a small current diode with a low cost, a small volume and a low weight; and
   3) The voltage equalizing capacitor C1 in the switch module does not absorb the fundamental frequency and frequency doubling fluctuation power, and the capacitance value is much smaller than the module capacitance of the MMC, and the volume and weight are greatly reduced.
b. Compared with the in-series connected module of a switch-type VSC, the switch module has the following characteristics:
   1) The voltage equalizing capacitor C1 is inversely connected with a diode (the diode D1), and there is no discharge path passing through T1, so there is no need to worry about the harm caused by the short circuit discharge of the voltage equalizing capacitor C1, the capacitance value of the voltage equalizing capacitor C1 can be increased, the voltage change speed of the voltage equalizing capacitor C1 is slowed down, a change rule of the voltage across T1 is similar to that of the MMC sub-module, an active equalizing control strategy can be adopted to ensure the dynamic and static equalizing effect, and there is no loss. Therefore, it has the characteristics of high reliability and high efficiency;
   2) There is a relatively large voltage equalizing capacitor, and the voltage at two ends of the voltage equalizing capacitor C1 in the switch module is relatively stable, and the energy acquisition power supply can be configured to simultaneously realize the functions of self-energy acquisition and energy dissipating elements.

Under an ideal operating condition, no current flows through D1 to charge C1. In practice, stray inductance of the bridge arm continues to flow. When T1 is turned off, energy of the stray inductance is absorbed by C1, and C1 would be charged. Although the stray inductance is very small, since C1 has no discharge circuit, the voltage of C1 would continue to increase over time, and after a long period of charging, it would be damaged by over-voltage. Therefore, each end of C1 need to be connected in parallel to an energy dissipating element. To this end, the present disclosure adopts an energy acquisition power supply as an energy dissipating element H1 (for example, FIG. 2), which can not only meet the demand for self-energy acquisition, but also avoid additional power loss. Of course, other forms of energy dissipating elements can also be adopted, for example, when the energy dissipating elements do not comprise a self-energy acquisition power supply (for example, FIG. 3), a drive and control system of the switch module can be powered externally.

In the converters in the present disclosure:
The switched capacitor valve in combination with the switch valve has the following benefits:
1) The switch valve only has two operating states: on and off, and cannot achieve a multi-level voltage output; and the switched capacitor valve is based on the modular in-series connection structure, and the switching of the module can generate the multi-level voltage, thus solving the problem of a traditional switch valve with a small number of levels and high switching frequency and large dv/dt.
2) The switch valve only turns the alternating current voltage into the pulsating direct current voltage when the alternating current voltage passes zero, while the switched capacitor valve is responsible for outputting the pulsating direct current voltage; and therefore, when the switch valve is switched, the output voltage of the switched capacitor valve is 0, which can realize zero voltage switch (ZVS) of the switch valve and quasi-zero current switch (quasi-ZCS), that is, a soft switch. The switching loss is almost 0, and the efficiency is high. When the switch valve adopts the IGCT, the volume, weight, cost and loss are greatly reduced due to the realization of the soft switch without a need to configure an anode reactor and a clamp capacitor.
3) The current flowing through the switched capacitor valve is the pulsating direct current obtained through the switch valve rectification - a direct current port current, and is an alternating current ripple current without a direct current bias, so the current is small, the requirement of the flow-through capacity of the device is small, the cost can be reduced, and the loss is also low. In addition, the alternating current ripple current is a frequency doubling current, of which the capacitive reactance is half smaller than the fundamental frequency ripple current of the MMC, so the capacitance value is greatly reduced, and the volume, weight and cost are greatly reduced.
4) The switch valve as a whole constitutes a full-bridge structure, and the utilization rate of the direct current voltage is twice as large as that of the half-bridge structure of the MMC and the VSC. Therefore, in the case of the same alternating current voltage, the AC/DC-type converter topology is conducive to reducing the number of switched capacitor modules and switch modules, thereby greatly reducing the cost, weight and volume.

The above are only preferred embodiments of the present disclosure and are not intended to limit the present disclosure in any form. Although the present disclosure has been disclosed in the preferred embodiments, it is not intended to limit the present disclosure. Any skilled person familiar with the profession, without departing from the scope of the technical schemes of the present disclosure, can use the technical contents disclosed above to make some changes or modifications for equivalent embodiments of equivalent changes. Any simple modification, equivalent variation or modification of the above embodiments in accordance with the technical substance of the technical disclosure, which does not depart from the contents of the technical schemes of the present disclosure, is all still within the scope of the technical schemes of the present disclosure.

## Claims

1. A switch module, wherein the switch module comprises a power switch device T1, a diode D1, a voltage equalizing capacitor C1 and an energy dissipating element H1, wherein
the energy dissipating element H1 is connected in parallel to two ends of the voltage equalizing capacitor C1; and
an anode of the diode D1 is connected to a collector of the power switch device T1, a first end of the voltage equalizing capacitor C1 is connected to a cathode of the diode D1, a second end of the voltage equalizing capacitor C1 is connected to an emitter of the power switch device T1, and a diode D2 is connected in anti-parallel to the power switch device T1.

2. The switch module according to claim 1, wherein the energy dissipating element H1 is any one or a combination of an energy acquisition power supply V, a first energy dissipating resistor R1, and a switchable device,
wherein the switchable device comprises a second energy dissipating resistor R2 and a switch S connected in series with the second energy dissipating resistor R2.

3. The switch module according to claim 2, wherein when the energy dissipating element H1 is the switchable device, a first end of the switch S is connected to a first end of the second energy dissipating resistor R2, a second end of the switch S is connected to a positive electrode of the voltage equalizing capacitor C1, and a second end of the second energy dissipating resistor R2 is connected to a negative electrode of the voltage equalizing capacitor C1.

4. The switch module according to claim 2, wherein the combination has a first combination form, wherein the first combination form is:
the energy dissipating element H1 comprises the switchable device and the energy acquisition power supply V, wherein a first end of the switch S is connected to a first end of the second energy dissipating resistor R2, and a second end of the switch S is connected to a positive electrode of the energy acquisition power supply V; and a second end of the second energy dissipating resistor R2 is connected to a negative electrode of the energy acquisition power supply V; and the positive electrode of the energy acquisition power supply V is connected to a positive electrode of the voltage equalizing capacitor C1, and the negative electrode of the energy acquisition power supply V is connected to a negative electrode of the voltage equalizing capacitor C1.

5. The switch module according to claim 2, wherein the combination has a second combination form, wherein the second combination form is:
the energy dissipating element H1 comprises the first energy dissipating resistor R1 and the energy acquisition power supply V, wherein a first end of the first energy dissipating resistor R1 is connected to a positive electrode of energy acquisition power supply V, and a second end of the first energy dissipating resistor R1 is connected to a negative electrode of the energy acquisition power supply V, the positive electrode of the energy acquisition power supply V is connected to a positive electrode of the voltage equalizing capacitor C1, and the negative electrode of the energy acquisition power supply V is connected to a negative electrode of the voltage equalizing capacitor C1.

6. The switch module according to claim 2, wherein the combination has a third combination form, wherein the second combination form is:
the energy dissipating element H1 comprises the first energy dissipating resistor R1, the energy acquisition power supply V and the switchable device, wherein a first end of the first energy dissipating resistor R1 is connected to a positive electrode of the energy acquisition power supply V, a second end of the first energy dissipating resistor R1 is connected to a negative electrode of the energy acquisition power supply V, the positive electrode of the energy acquisition power supply V is connected to a positive electrode of the voltage equalizing capacitor C1, and the negative electrode of the energy acquisition power supply V is connected to a negative electrode of the voltage equalizing capacitor C1; and a first end of the switch S is connected to a first end of the second energy dissipating resistor R2, a second end of the switch S is connected to a first end of the first energy dissipating resistor R1, and a second end of the second energy dissipating resistor R2 is connected to a second end of the first energy dissipating resistor R1.

7. The switch module according to any one of claims 1-6, wherein the switch module further comprises a switch-type bypass element K1, a first end of the switch-type bypass element K1 is connected to the collector of the power switch device T1, and a second end of the switch-type bypass element K1 is connected to the emitter of the power switch device T1.

8. A switch valve string, wherein the switch valve string comprises a terminal A, a terminal B, and n switch modules according to any one of claims 1-7, wherein
the n switch modules are sequentially connected in series and disposed between the terminal A and the terminal B.

9. The switch valve string according to claim 8, wherein the n switch modules are sequentially connected in series in a following manner:
a collector in a first power switch device T1 is connected to the terminal A, and an emitter in the n^{th} power switch device T1 is connected to the terminal B; and
in the remaining power switch devices T1, a collector in a next power switch device T1 is connected to an emitter in a previous power switch device T1.

10. A control method for a switch valve string, the switch valve string using the switch valve string according to claim 8 or 9, wherein the control method comprises:
reconfiguring N2 switch modules between the two terminals A and B of the switch valve string after the switch valve string reaches a normal operating condition, and N2 ≥ 1;
sorting voltages of voltage equalizing capacitors C1 of N1 + N2 switch modules of the switch valve string; and
after sorting, maintaining the power switch devices T1 turned on for the first N/2 switch modules with voltages from high to low, controlling power switch devices T1 of the remaining N1 switch modules to be turned on or turned off to achieve voltage equalizing control of the voltage equalizing capacitors C1 in all the switch modules.

11. The control method for a switch valve string according to claim 10, wherein the normal operating condition is: N1 * Uₛₘ ≥ Uₘₐₓ,
wherein Uₘₐₓ is a voltage peak value between the two terminals A and B of the switch valve string; the Usm is a voltage rated value of a voltage equalizing capacitor C1 of a single switch module; and N1 is the number of the switch modules in the switch valve string before the N2 switch modules are configured.
